# EUROPEAN PATENT SPECIFICATION

(11) **EP 2 826 273 B1**
(45) Date of publication and mention of the grant of the patent: **08.06.2022**
(21) Application number: 13712062.2
(22) Date of filing: 12.03.2013
(51) Int. Cl.: H04W 16/10, H04W 24/02, H04W 84/04, H04W 4/02

(54) **METHOD AND SYSTEM FOR FEMTOCELL CHANNEL SELECTION**
VERFAHREN UND SYSTEM ZUR FEMTOZELLENKANALAUSWAHL
PROCÉDÉ ET SYSTÈME DE SÉLECTION DE CANAL FEMTOCELLULAIRE

(30) Priority: 12.03.2012 US 201261609858 P; 11.03.2013 US 201313793687
(43) Date of publication of application: 21.01.2015
(73) Proprietor: Qualcomm Incorporated, San Diego, CA 92121 (US)
(72) Inventor: PATEL, Chirag Sureshbhai, San Diego, California 92121 (US); CHANDE, Vinay, San Diego, California 92121 (US); YAVUZ, Mehmet, San Diego, California 92121 (US)
(74) Representative: Dunlop, Hugh Christopher
(86) International application number: PCT/US2013/030608
(87) International publication number: WO 2013/138383

(56) References cited:
- EP-A1- 2 426 974
- WO-A1-2011/065493
- WO-A1-2012/026857
- US-A1- 2009 082 031
- "3rd Generation Partnership Project; Technical Specification Group Radio Access Network; Evolved Universal Terrestrial Radio Access (E-UTRA); FDD Home eNode B (HeNB) Radio Frequency (RF) requirements analysis (Release 10)", 3GPP STANDARD; 3GPP TR 36.921, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 12 April 2011 (2011-04-12), pages 1-45, XP050477565, [retrieved on 2011-04-12]
- OLIVER HOLLAND ET AL: "Green spectrum management for mobile operators", GLOBECOM WORKSHOPS (GC WKSHPS), 2010 IEEE, IEEE, PISCATAWAY, NJ, USA, 6 December 2010 (2010-12-06), pages 1458-1463, XP031859075, ISBN: 978-1-4244-8863-6

## Description

### Field of Disclosure

Aspects of this disclosure relate generally to telecommunications, and more particularly to femtocell channel selection and the like.

### Background

Wireless communication systems are widely deployed to provide various types of communication content such as, for example, voice, data, and so on. Typical wireless communication systems may be multiple-access systems capable of supporting communication with multiple users by sharing available system resources (e.g., bandwidth, transmit power, etc.). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), evolution data optimized (EV-DO), etc.

Generally, wireless multiple-access communication systems may simultaneously support communication for multiple mobile devices. Each mobile device may communicate with one or more base stations via transmissions on forward and reverse links. The forward link (or downlink) refers to the communication link from base stations to mobile devices, and the reverse link (or uplink) refers to the communication link from mobile devices to base stations. Further, communications between mobile devices and base stations may be established via single-input single-output (SISO) systems, multiple-input single-output (MISO) systems, multiple-input multiple-output (MIMO) systems, and so forth. In addition, mobile devices can communicate with other mobile devices (and/or base stations with other base stations) in peer-to-peer wireless network configurations.

To supplement conventional base stations, additional low power base stations can be deployed to provide more robust wireless coverage to mobile devices. For example, low power base stations (e.g., which can be commonly referred to as Home NodeBs or Home eNBs, collectively referred to as H(e)NBs, femto nodes, pico nodes, micro nodes, etc.) can be deployed for incremental capacity growth, richer user experience, in-building or other specific geographic coverage, and/or the like. In some configurations, such low power base stations are connected to the Internet via a broadband connection (e.g., digital subscriber line (DSL) routers, cable or other modems, etc.), which can provide the backhaul link to the mobile operator's network. In this regard, low power base stations are often deployed in homes, offices, etc. without consideration of a current network environment.

Femto nodes of this type operate in (i.e., transmit or receive signals on) one or more radio frequency (RF) channels, identified by a central frequency and bandwidth, typically occupying a small fraction of a larger communication band. Two RF channels may see different wireless propagation characteristics if the bands they occupy are different because different bands typically have different propagation characteristics, such as attenuation / path loss variation with distance, absorption into materials and transmission media, etc. For example, for the same distance/propagation path between transmitter and receiver, bands at higher frequencies ('higher band', e.g., frequencies around 5 GHz) have larger path-loss than those at lower frequencies (Tower band', e.g., frequencies around 850 MHz). Further, even within the same band, two RF channels of a femto node may see different interference conditions due to the presence or absence of other transmitting nodes.

Typically, when multiple RF channels and/or bands are available, a femto node chooses its channel / band by measuring the signal strength of surrounding femto and macro nodes on one or more of the available channels / bands. For example, in a closed access deployment, a femto node may choose the channel / band where it measures the least signal strength from other femto and macro nodes in order to avoid interference. In an open access deployment, a femto node may select the same channel as other femto and macro nodes to achieve better frequency reuse, but this may again lead to interference issues in high density femto node deployments. Thus, there remains a need for improved techniques for frequency agile femto node deployments.

OLIVER HOLLAND ET AL: "Green spectrum management for mobile operators" investigates dynamic spectrum access of the range of spectrum bands available to an operator to reduce necessary power consumption in providing services.

### SUMMARY

The invention is set out in the appended set of claims.

### BRIEF DESCRIPTION OF THE DRAWINGS

FIG. 1 is a block diagram of an example wireless system in building environment.
FIG. 2 is a flow diagram of an example methodology for facilitating selection of one or more operating channel(s) / band(s) of a femto node based on femto node location.
FIG. 3 is a flow diagram of an example methodology for facilitating selection of different operating channel(s)/band(s) of a femto node for overhead (pilot / control) and data channels.
FIG. 4 is a flow diagram of an example methodology for facilitating selection of one or more operating channel(s) / band(s) of a femto node based on an access policy.
FIG. 5 is a flow diagram of an example methodology for facilitating selection of one or more operating channel(s) / band(s) of a femto node based on RF conditions.
FIG. 6 is a flow diagram of an example methodology for facilitating selection of one or more operating channel(s) / band(s) of a femto node based on the type of application(s) running on a mobile device.
FIG. 7 is a flow diagram of an example methodology for facilitating selection of one or more operating channel(s) / band(s) of a femto node based on femto node density information in the surrounding area.
FIG. 8 is a flow diagram of an example methodology for facilitating selection of one or more operating channel(s) / band(s) of a femto node in a home femto network.
FIG. 9 is a flow diagram of an example methodology for facilitating selection of one or more operating channel(s) / band(s) of a femto node based on joint energy conservation.
FIG. 10 is a flow diagram of an example methodology for femto node radio frequency channel selection according to various band-selection criteria.
FIG. 11 is a flow diagram of an example methodology for coordinating operation among femto nodes based on advertised channel information.
FIG. 12 is a flow diagram of an example methodology for coordinating operation among femto nodes based on common uplink control signaling.
FIG. 13 is a flow diagram of an example methodology for coordinating operation among femto nodes based on common downlink control signaling.
FIG. 14 is a flow diagram of an example methodology for coordinating operation among femto nodes based on the collection of network statistics information from femtocells and mobile devices.
FIG. 15 is a flow diagram of an example methodology for coordinating operation among femto nodes based on separation of downlink and uplink signaling at respective femtocells.
FIG. 16 is a block diagram of an example system for femtocell channel selection.
FIG. 17 is a block diagram of an example wireless communication system in accordance with various aspects set forth herein.
FIG. 18 is an illustration of an example wireless network environment that can be employed in conjunction with the various systems and methods described herein.
FIG. 19 illustrates an example wireless communication system, configured to support a number of devices, in which the aspects herein can be implemented.
FIG. 20 is an illustration of an exemplary communication system to enable deployment of femtocells within a network environment.
FIG. 21 illustrates an example of a coverage map having several defined tracking areas.

### DETAILED DESCRIPTION

In general, the systems and methods disclosed herein provide mechanisms for intelligently choosing a femto node's radio frequency (RF) channel and/or band to meet coverage, interference, and mobility management criteria in a femto node deployment. For example, according to various embodiments, claimed or otherwise, a femto node may select an operating RF channel / band based on factors such as the femto node's location in a residence or office building, capacity and coverage requirements, access policy, end user applications, propagation conditions to mobile devices, femto node density, and other criteria.

Further, a group of multiple femto nodes operating in different channels and bands can communicate with each other (e.g., via backhaul signaling) to form a femto node network, so as to enhance the network performance, robustness, and adaptability, as well as mobile device mobility and battery life. These improvements are achieved by new mechanisms described herein, such as an advertisement channel for the entire network, collective downlink and uplink communication, collection and communication of statistical information via a subset of femto nodes, using separation of downlink and uplink serving cells, and others.

As used herein, the terms "component," "module," "system," and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, communication device, user agent, user device, or user equipment (UE). A wireless terminal or device may be a cellular telephone, a satellite phone, a cordless telephone, a Session Initiation Protocol (SIP) phone, a wireless local loop (WLL) station, a personal digital assistant (PDA), a handheld device having wireless connection capability, a tablet, a computing device, or other processing devices connected to a wireless modem. Various aspects are also described herein in connection with a base station. A base station may be utilized for communicating with wireless terminals and may also be referred to as an access point, a Node B, evolved Node B (eNB), home Node B (HNB) or home evolved Node B (HeNB), collectively referred to as H(e)NB, or some other terminology.

A low power base station, as referenced herein, may include a femto node, a pico node, micro node, home Node B or home evolved Node B (H(e)NB), relay, and/or other low power base stations, and may be referred to herein using one of these terms, though use of these terms is intended to generally encompass low power base stations. In general, a low power base station transmits at a relatively low power as compared to a macro base station associated with a wireless wide area network (WWAN). As such, the coverage area of the low power base station can be substantially smaller than the coverage area of a macro base station.

The term "or" as used herein is intended to mean an inclusive "or" rather than an exclusive "or." Unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used in conjunction with various wireless communication systems such as CDMA, TDMA, FDMA, OFDMA, SC-FDMA, WiFi carrier sense multiple access (CSMA), and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95, and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM^{®}, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE, and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (e.g., mobile-to-mobile) ad hoc network systems often using unpaired unlicensed spectrums, 802.xx wireless LAN, BLUETOOTH, and any other short- or long-range, wireless communication techniques.

Various aspects or features will be presented in terms of systems that may include a number of devices, components, modules, and the like. It is to be understood and appreciated that the various systems may include additional devices, components, modules, etc., and/or may not include all of the devices, components, modules, etc. discussed in connection with the figures. A combination of these approaches may also be used.

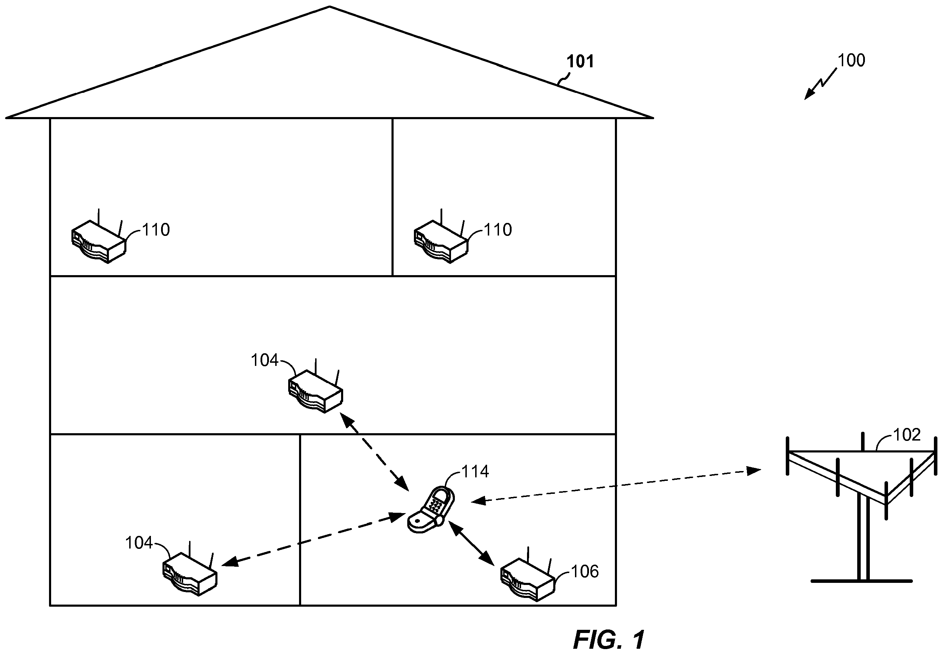

FIG. 1 shows an example wireless communication system 100 deployed in a multi-story / multi-unit apartment or office building 101. System 100 includes an outside macro base station 102 that can provide one or more mobile devices 114 with access to a wireless network. The system 100 also includes a plurality of femto nodes 104, 106, 108, 110, and 112, located at various points inside the building 101. It will be appreciated that the femto nodes 104, 106, 108, 110, and/or 112 can be other types of low power base stations, relay nodes, devices (e.g., communicating in peer-to-peer or ad-hoc mode with other devices over a backhaul connection or over the air), and so on. Each femto node forms a femtocell (described in greater detail below). The system 100 additionally comprises a mobile device 114, located inside one of the building units, that communicates with one or more of the femto nodes 104, 106 and/or 108 as well as with the macro base station 102 to receive wireless access to the mobile network.

Each femto node in FIG. 1 operates in (i.e., transmits or receives signals on) one or more RF channels. As discussed in the background above, when multiple RF channels and/or bands are available, conventionally configured femto nodes are often programmed to select an operating channel / band by measuring the signal strengths of surrounding femto and macro nodes on one or more of these channels / bands. For example, in a closed access deployment, the femtocell 106 may choose a channel / band where it measures the least signal strength from other macro nodes (e.g., the macro base station 102) and other femto nodes (e.g., the femto nodes 104 and 108) in order to avoid interference. In an open access deployment, the femto node 106 may select the same channel as these other macro and femto nodes to achieve better frequency reuse, which may lead to interference issues in high density femto node deployments.

Instead, according to various embodiments herein, the femto node 106 (or any of the other femto nodes shown in FIG. 1) may be advantageously configured to select an operating channel / band based on more advanced and/or coordinated criteria. For example, some femto nodes (e.g., those near the edge of the building 101) may pick one channel / band (e.g., a lower band) and other femto nodes (e.g., those deeper inside the building 101) may pick another channel / band (e.g., a higher band) to minimize interference and coordinate indoor as well as outdoor coverage.

Various techniques and selection schemes for frequency agile femto node deployments are described in detail below. While, for purposes of simplicity of explanation, the methodologies below may be shown and described as a series of acts, it is to be understood and appreciated that these methodologies are not limited by the order of acts, as some acts may, in accordance with one or more embodiments, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a given methodology in accordance with one or more embodiments.

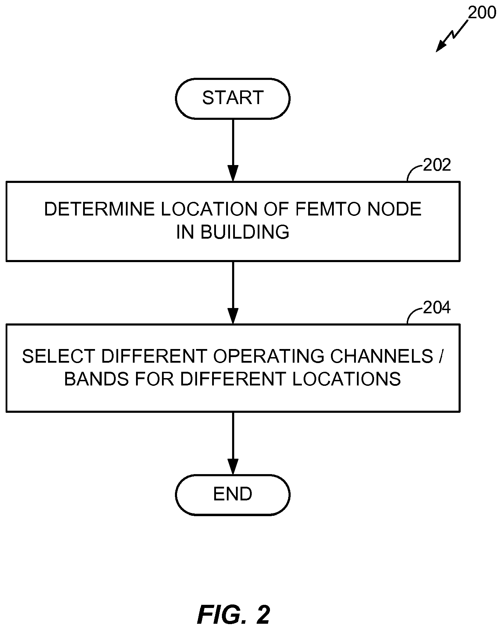

FIG. 2 is a flow diagram of an example methodology for facilitating selection of one or more operating channel(s) / band(s) of a femto node based on femto node location, as per the invention. The illustrated methodology 200 may be defined in instructions stored on a femto node, such as femto node 106, for example, or some other entity (e.g., a central controller), or on one or more components thereof, and executed by a processor to perform the described operations. As shown, a femto node (or other entity) determines its location in a building ( near a window or deep in the building) (block 302). Based on the determined location, the femto node selects an RF channel for communication with one or more mobile devices (block 304). The femto node chooses a higher band if operating deep inside the building or a lower band if operating near a window.

Location-based channel selection allows a femto node to more appropriately select an operating RF channel / band based on its location in a house, apartment building, office building, etc. (e.g., near a window or exterior wall / floor) to achieve good coverage while maintaining a reasonable interference tradeoff. For example, a femto node may operate at two bands that are available, such as the 2 GHz and 60 GHz bands. Given that the 60 GHz band has a significantly higher path loss compared to the 2 GHz band, femto nodes at the edge of a building may choose to operate on the lower band to extend their coverage outdoors (as well as indoors) while femto nodes deeper in the building may choose the higher band to limit their coverage indoors. As a result, interior femto nodes will provide good coverage indoors without leaking outside and interfering with femto nodes in other buildings, and femto nodes at the edge near windows will provide good coverage outdoors. In effect, this results in a two-layered network with the lower band serving as a coverage layer and the higher band serving as a capacity layer, where better capacity is achieved at the higher band due to lower interference from other femto nodes.

The location-based band / channel selection mechanism can help in achieving good indoor and outdoor coverage. Therefore, it is well-suited for neighborhood femtocell networks, e.g., where femto nodes have open access and are deployed to provide coverage indoors as well as outdoors. However, in some deployment scenarios, this arrangement may result in reduced indoor coverage and force some indoor users to receive service from femto nodes near the edge. To address this, if an interior femto node detects underuse of its resources, it can switch to a lower frequency to extend its coverage range, and thus service more users. Similarly, an exterior femto node can switch to a higher frequency to limit its coverage area upon detecting that it is running out of capacity by serving too many mobile devices.

In some deployment scenarios, femto nodes may be capable of concurrent operation on multiple channels / bands. In such a case, interior femto nodes may be configured to use both channels / bands concurrently, while exterior femto nodes may be configured to use only one of channels / bands (e.g., the lower band). This provides coverage to outdoor users on the lower band and higher data rates to indoor users by concurrent use of the lower and upper bands. Alternatively, the interior femto nodes may turn on operation in the lower band only when supporting high data rate mobile devices or running out of capacity when operating in the higher band.

In addition to its horizontal location within the building, the femto node may be configured to select the operating channel / band based on the vertical position (e.g., the floor) of the building where the femto node is deployed. For example, higher floor femto nodes may choose the higher band to limit leakage outside because the path loss from higher floors to the outside is typically lower compared to the path loss from lower floors. Alternatively, lower floor femto nodes can choose the lower band if more outdoor coverage is desired. Thus, given a femto node's location, it can choose its band / channel to meet desired coverage as well as interference management requirements.

In other non-claimed embodiments, the femto node may be configured to determine its location through OAM (Operation Administration and Management), via an operator technician installing or maintaining the femto node, or via self-learning by the femto node. Example methods for the femto node to self-learn its location in a building are described below. With the self-learning approach, the femto node can initially use either band / channel and then re-select based on the learned information.

In one example, the femto node can use GPS signal strength to determine its location in the building. As GPS signal strength fades quickly at about 5 to 10 m away from windows or other exterior pathways, GPS signal strength can be used to determine the femto node's location near a window or house edge as compared to deeper in the interior. A GPS signal strength (e.g., observed and averaged over a certain duration) that exceeds a pre-determined threshold serves as indication that the femto node is near a window.

In another example, the femto node can use the number of registrations received from mobile devices to determine its location. If the number of registrations over a certain time period exceeds a threshold, it may indicate that the femto node is near the edge of the building and servicing users outside, or otherwise leaking outside and causing registrations from passing users. Thus, the number of registrations can serve as indication of a femto node's location at the edge or in the interior of a building.

In another example, the femto node can use the signal strength from nearby macrocell base stations or other communication systems (e.g., TV stations) as an indication that the femto node's location is near a window / home edge or deeper in the interior of a building. For example, the femto node can be configured to measure the signal strength of nearby base stations using a Network Listen Module (NLM) and can also build a database of macro node measurements using UE feedback. Using these two pieces of information, if macro node signal strength is found to be above a certain threshold, the femto node can consider itself to be located at the edge of the building.

In another example, the femto node may utilize readings of various sensors (e.g., cameras as part of a security system) to determine its location in a building. For example, by obtaining snapshots of its surroundings, a camera-equipped femto node can determine its relative location. Other sensors such as altimeters can be used for determining the height of the femto node in the building.

In another example, the femto node may use an indoor-positioning application or a combination of the methods described above to determine its relative location in a building. Having determined its location in the building, the femto node may select its operating channel(s)/band(s) to minimize interference and improve indoor as well as outdoor coverage.

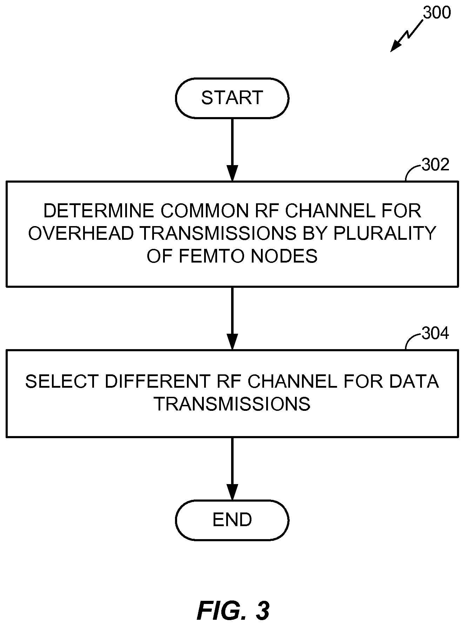

FIG. 3 is a flow diagram of an example methodology for facilitating selection of different operating channel(s)/band(s) of a femto node for overhead (pilot / control) and data channels. The illustrated methodology 300 may be defined in instructions stored on a femto node, such as femto node 106, for example, or some other entity (e.g., a central controller), or on one or more components thereof, and executed by a processor to perform the described operations. As shown, a femto node (or other entity) may determine a common RF channel out of a plurality of RF channels for overhead transmissions by a plurality of femto nodes (block 302). The femto node may use this common RF channel for its own overhead transmissions and then select a different RF channel out of the plurality of RF channels for data transmissions (block 304).

Typically, overhead channels (e.g., pilot channels, paging channels, synchronization channels, etc.) have a low data rate and high reliability. In addition, since these channels have certain well-defined structures, mobile devices can more easily cancel interfering pilot / control channels from non-serving cells. This is often not the case for data channels. Thus, in some non-claimed embodiments, a plurality of femto nodes are configured to operate their overhead channels on the same, common channel / band (which can be pre-configured) and apply channel / band selection for their data channels based on other techniques described herein, thus resulting in overhead / control channel operation in channels / bands different from that of the data channels.

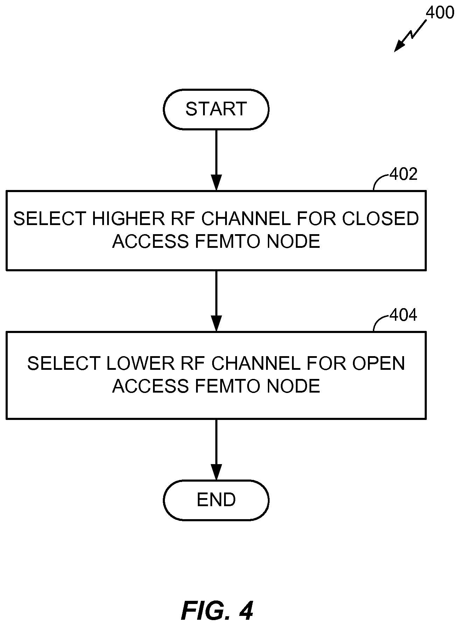

FIG. 4 is a flow diagram of an example methodology for facilitating selection of one or more operating channel(s) / band(s) of a femto node based on an access policy. The illustrated methodology 400 may be defined in instructions stored on a femto node, such as femto node 106, for example, or some other entity (e.g., a central controller), or on one or more components thereof, and executed by a processor to perform the described operations. As shown, a higher RF channel may be selected for closed access femto nodes (block 402), while a higher RF channel may be selected for open access femto nodes (block 404).

An access policy-based channel selection scheme enables selection of a channel / band based on a femto node's particular access policy. For example, in a mixed open / closed access deployment, femto nodes with closed access may be configured to choose a higher band to limit interference to other femto nodes. Meanwhile, femto nodes with open access may be configured to choose a lower band to provide a larger coverage area.

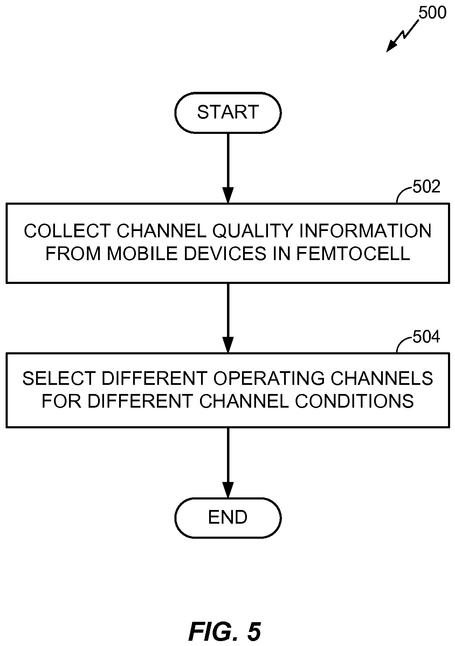

FIG. 5 is a flow diagram of an example methodology for facilitating selection of one or more operating channel(s) / band(s) of a femto node based on RF conditions. The illustrated methodology 500 may be defined in instructions stored on a femto node, such as femto node 106, for example, or some other entity (e.g., a central controller), or on one or more components thereof, and executed by a processor to perform the described operations. As shown, a femto node (or other entity) may collect from mobile devices in the femtocell, quality of RF channel information as seen by the mobile devices (block 402). Based on the collected channel quality information, the femto node may select an appropriate channel to communicate with each mobile device (block 404). For example, if the RF signal strength at the mobile device is strong, then the femto node may choose a higher band for communication with that mobile device. Conversely, if the RF signal strength at the mobile device is weak, then the femto node may choose a lower band.

Selecting a femto node's operating channel / band based on RF propagation conditions to a mobile device helps minimize interference to other mobile devices and improve coverage. For example, initial communication between the femto node and a mobile device can be established on a pre-defined channel / band. Thereafter, the femto node can request the mobile device to send channel quality information from which metrics such as path loss to the mobile device, interference from other cells, and other conditions can be derived. The femto node can then choose a better channel / band for subsequent operation. If the path loss to the mobile device is small, the femto node can select a higher band and similarly choose a lower band if the path loss to mobile device is large. When serving multiple mobile devices, this results in a deployment where far-off devices are on a lower band and nearby devices are on a higher band. This works favorably for the mobile devices as a whole as well as the network because lower transmit power is needed in the lower band to serve the further mobile devices, resulting in improved power efficiency and reduced interference.

The femto node may be additionally or alternatively configured to select an operating channel / band based on propagation channel characteristics such as line-of-sight (LOS) or non line-of-sight (NLOS). For example, a mobile device can provide feedback on the number of multipath fingers that it sees from the femto node, their power profile, their delay spread, and fading statistics such as a Rician K factor that can help the femto node to determine an appropriate propagation channel to the mobile device. For example, a high Rician K factor with only one or two strong multipaths can serve as an indication of LOS or near-LOS conditions. Since higher bands are more suited for LOS operation, in this case, the femto node can select a higher band to serve the mobile device.

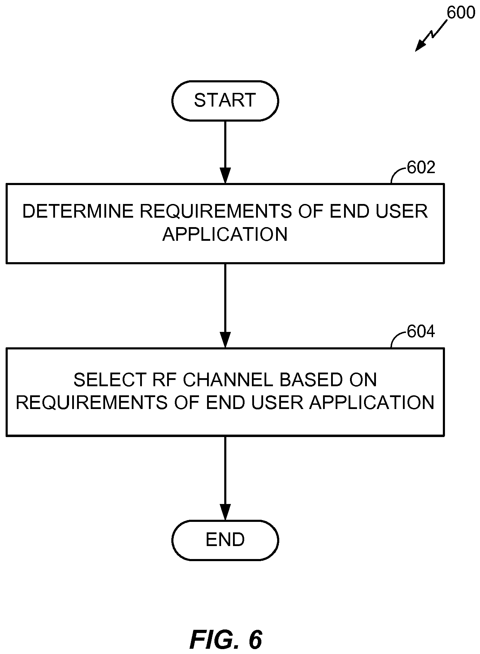

FIG. 6 is a flow diagram of an example methodology for facilitating selection of one or more operating channel(s) / band(s) of a femto node based on the type of application(s) running on a mobile device. The illustrated methodology 600 may be defined in instructions stored on a femto node, such as femto node 106, for example, or some other entity (e.g., a central controller), or on one or more components thereof, and executed by a processor to perform the described operations. As shown, a femto node (or other entity) may determine one or more requirements of an end user application (block 602). The femto node may then select an RF channel based on the requirements of the end user application (block 604).

For example, a femto node may be embedded within a TV and a mobile device may be used by the end user for gaming on the TV. In such a case, the mobile device is likely to be in LOS conditions with the femto node or in short range of the femto node. Therefore, even without any feedback from the mobile device, the femto node can decide to use a higher band to serve the nearby user. Similarly, the femto node may choose different bands for different types of traffic (e.g., broadcast, unicast, streaming, data, etc.). For example, broadcast traffic may be carried in the lower band to provide coverage over a larger area, whereas unicast traffic can be carried in the higher band.

Further, the nature of the application may be used to determine the band selection. For example, applications requiring ranging (e.g., distance estimation) between a mobile device and femto node may be provided operation in a higher band where ranging is easier. In another example, applications requiring higher over-the-air security and jamming resistance may be moved to a higher band where higher bandwidth may be available and techniques such as Frequency Hopped Spread Spectrum (FH-SS) can be used over a wider band to provide additional security and jamming resistance.

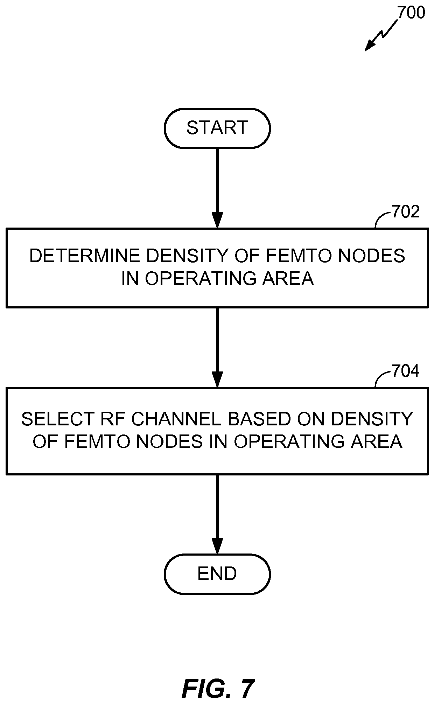

FIG. 7 is a flow diagram of an example methodology for facilitating selection of one or more operating channel(s) / band(s) of a femto node based on femto node density information in the surrounding area. The illustrated methodology 700 may be defined in instructions stored on a femto node, such as femto node 106, for example, or some other entity (e.g., a central controller), or on one or more components thereof, and executed by a processor to perform the described operations. As shown, a femto node (or other entity) may determine a density of femto nodes in an operating area (block 702). In some embodiments, determining the density may comprise determining a number of and distance to neighboring femto nodes. The femto node may then select an RF channel based on the density of femto nodes in the operating area (block 704).

If femto node density is sparse in a given area, the femto node may choose to operate in lower bands to provide a larger coverage area. If femto node density is high, however, inter-cell interference can be reduced by operating in higher bands to reduce interference and handovers between neighboring nodes. According to various embodiments, femto node density information can be gathered over time, via, for example, mobile device measurements such as handover-history combined with inter-frequency measurement history in the surrounding areas, or an increase in the number of femto pilots reported by a mobile device through measurement report messages.

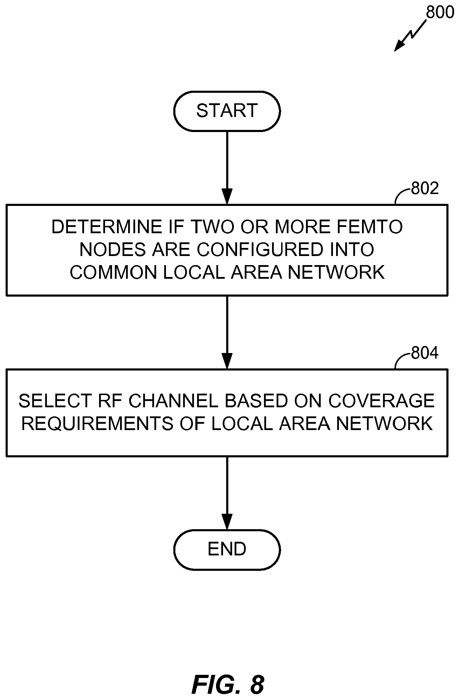

FIG. 8 is a flow diagram of an example methodology for facilitating selection of one or more operating channel(s) / band(s) of a femto node in a home femto network. The illustrated methodology 800 may be defined in instructions stored on a femto node, such as femto node 106, for example, or some other entity (e.g., a central controller), or on one or more components thereof, and executed by a processor to perform the described operations. As shown, a femto node (or other entity) may determine if any other femto nodes (e.g., if two or more femto nodes in total) are configured into a common local area network (block 802). The femto node may then select an RF channel based on coverage requirements of the local area network (block 804). When two or more femto nodes are configured as part of a common local area network (e.g., a home or office network), several methods can be used for channel / band selection based on common or different operational requirements in such a network. Examples of these methods are given below.

In one example, the femto nodes can measure a path loss to each other (e.g., through network listen functionality). If the path loss is below a threshold indicating close proximity of the femtocells, the femto nodes can choose different channels / band to avoid self-interference.

In another example, the femto nodes can choose the same or different channels / bands depending on capabilities of the mobile devices they are serving. For example, the femto nodes can choose the same channel / band to operate as a virtual MIMO system or provide soft / softer handoff to mobile devices in coverage of both femtocells. When the femto nodes normally operate on different bands / channels, they may be configured to dynamically switch to a common band / channel when a mobile device is in a coverage region of both femtocells to provide better service to this mobile device (e.g., same frequency COMP or MIMO) without requiring the mobile device to operate on two channels concurrently. This can help reduce battery drain at the mobile device.

The channel / band selection can be done centrally (e.g., at a router where two femtocells converge) or in a distributed fashion by femto nodes separately. The femto nodes may accordingly exchange information over the backhaul regarding femto capabilities (e.g., transmit power capabilities) and surrounding RF conditions (e.g., interference levels on different bands / channels). For example, if one femto node supports high power compared to the other femto node, the high power femto node may be configured to operate on a lower band to provide a larger coverage area, while the low power femto node may be configured to operate on a higher band to provide coverage over shorter distances.

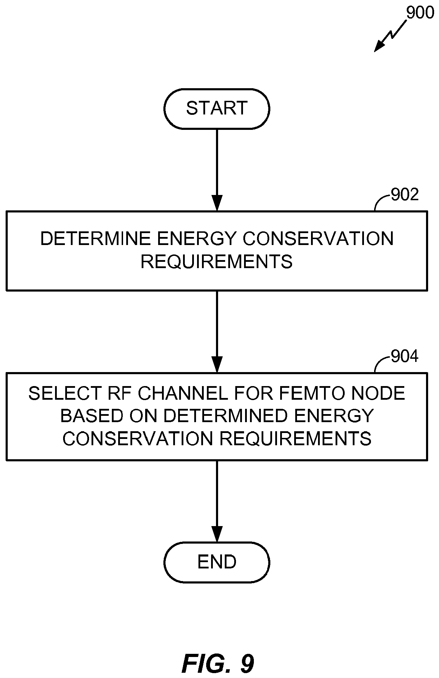

FIG. 9 is a flow diagram of an example methodology for facilitating selection of one or more operating channel(s) / band(s) of a femto node based on joint energy conservation. The illustrated methodology 900 may be defined in instructions stored on a femto node, such as femto node 106, for example, or some other entity (e.g., a central controller), or on one or more components thereof, and executed by a processor to perform the described operations. As shown, a femto node (or other entity) may determine energy conservation requirements, such as for itself, for other femto nodes, or for mobile devices (block 902). The femto node may then select an RF channel based on the determined energy conservation requirements (block 904).

Select operating channels / bands for several neighboring femto nodes in this way may be useful in minimizing the total energy consumed by all femto nodes while maximizing coverage. In one example, each femto node can adapt its band / channel to conserve energy based on the path loss to mobile devices it is serving, time of day, or other criteria. The transmission power needed to serve mobile devices in each possible band / channel may be determined, and the band / channel that requires the least amount of energy may be selected. The femto node can additionally choose the band / channel where no power amplifier is needed, thereby reducing energy consumption. Such adaptation can be done at night when not many mobile devices need to be served or when mobile devices are near the femtocell, so that high transmit power is not needed.

In another example, the methodology may be performed by a central controller that knows the locations of femto nodes in a neighborhood and learns the RF conditions and coverage provided by the femto nodes while using certain bands / channels through mobile device feedback (e.g., via the femto nodes themselves). Based on this, the central controller can optimally choose (e.g., through convex / linear / non-linear optimization methods) a band / channel assignment for each femto node, such that higher coverage is achieved with lower transmission power and usage of an appropriate band / channel.

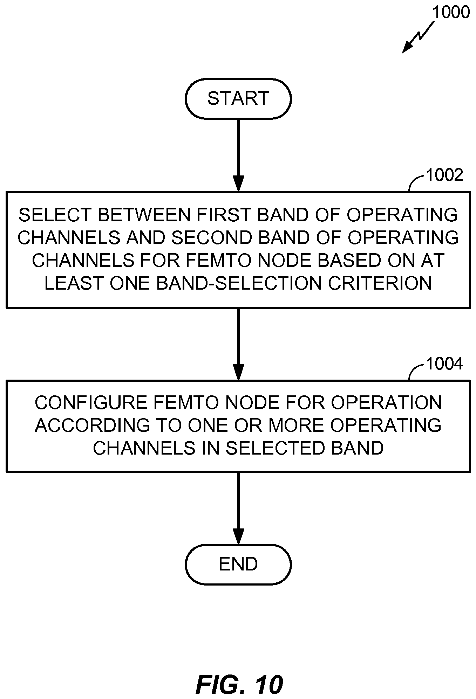

In view of the above, it will be appreciated that femto node radio frequency channel selection may be practiced in many ways according to various band-selection criteria. FIG. 10 is a flow diagram of an example methodology for femto node radio frequency channel selection according to various band-selection criteria. As shown, such a method 1000 may include selecting between a first band of operating channels and a second band of operating channels for a femto node based on at least one band-selection criterion (block 1002). The first band may include a plurality of channels that are higher in frequency than a plurality of channels in the second band. The method may accordingly further include configuring the femto node for operation according to one or more operating channels in the selected band (block 1004).

As discussed above, the band-selection criterion comprises a location of the femto node in a building, and the selecting comprises determining the location of the femto node in the building and selecting between the first and second bands for the femto node based on the location of the femto node in the building. The second band is selected when the femto node is located near a window or side of the building and the first band is selected when the femto node is located deeper inside the building. The band-selection criterion may also comprise channel type information. For example, the first band may be selected for a data channel and the second band may be selected for an overhead pilot or control channel. In some systems, the selected overhead pilot or control channel in the second band may be selected to overlap with an overhead pilot or control channel employed by at least one neighboring femto node.

The band-selection criterion may also comprise an access policy of the femto node. For example, the first band may be selected when the femto node is a closed access femto node and the second band may be selected when the femto node is an open access femto node. The band-selection criterion may also comprise radio frequency propagation conditions at the femto node, and the selecting may comprise collecting channel quality reading information from one or more mobile devices and selecting between the first and second bands for the femto node based on the collected channel quality reading information. The band-selection criterion may also comprise femto density information in an operating area of the femto node. For example, the first band may be selected when the density is above a density threshold and the second band may be selected when the density is below the threshold.

As further discussed above, the configuring may be performed by the femto node itself and comprise modifying a channel setting of the femto node. Alternatively, the configuring may be performed by a remote entity or central controller and comprise sending a message to the femto node instructing the femto node to operate on the selected band.

It will also be appreciated that the techniques presented herein for channel / band selection can be extended for selecting other femto resources as well, such as Tx/Rx antennas, Tx power, and bandwidth. For example, a femto with multiple Tx antennas may be capable of performing various advanced antenna processing techniques such as Tx diversity or spatial multiplexing (MIMO). In this case, the particular antenna technique to be employed may be selected based on the femto node's location in a building and so on. For example, femto nodes near a window or house edge, which are handling handoffs of passing-by outdoor users, can be configured to use Tx diversity to improve handoff performance. Conversely, femto nodes in the interior of the building can be configured to use spatial multiplexing to provide higher capacity and data rates to indoor users.

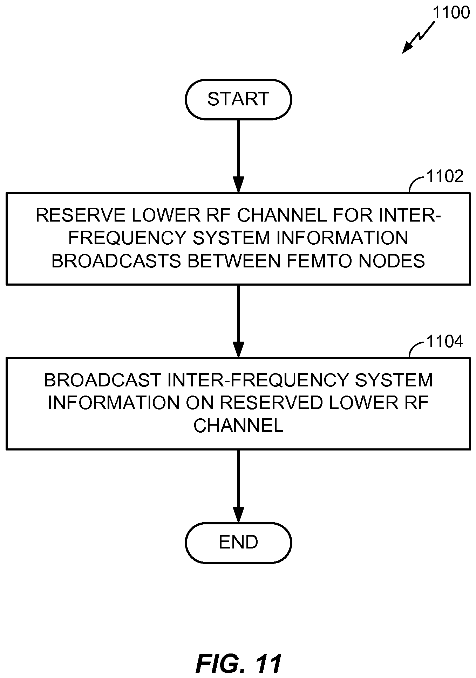

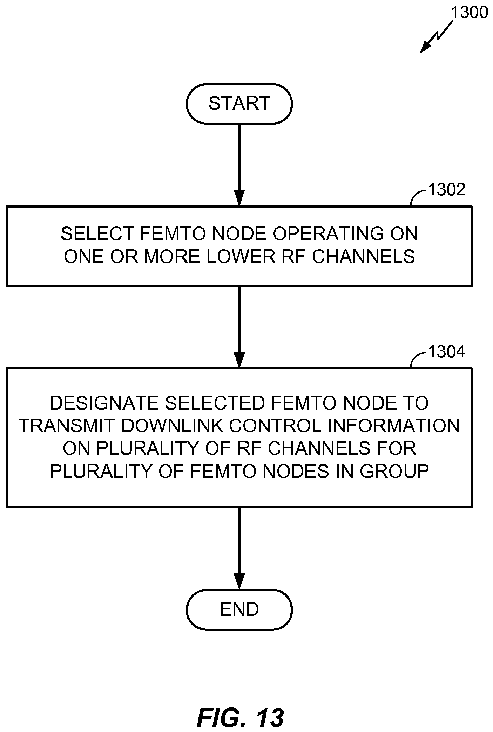

FIGS. 11-14 discussed in turn below relate to coordination among femto nodes utilizing multiple bands to improve mobility, interference management, and mobile device battery-life. Coordination among femto nodes can take the form of slow non-real time coordination, for example, as in FIGS. 11-12, or to more real time on-line coordination, as in FIGS. 13-14. The coordination can generally be accomplished through information sent over the backhaul, either directly between femto nodes or via central or distributed entities responsible for femto node coordination.

FIG. 11 is a flow diagram of an example methodology for coordinating operation among femto nodes based on advertised channel information. The illustrated methodology 1100 may be defined in instructions stored on a femto node, such as femto node 106, for example, or some other entity (e.g., a central controller), or on one or more components thereof, and executed by a processor to perform the described operations. As shown, a lower RF channel may be reserved for inter-frequency system information broadcasts between femto nodes (block 1102). Inter-frequency system information may then be broadcast by the femto nodes on the reserved lower RF channel (block 1104).

In higher bands, the available bandwidth for femto node deployment may be much larger than typical mobile device receiver bandwidths. In conventional inter-frequency search scenarios, this may result in high delays in discovery / scanning all the available femto carriers by the mobile device. Instead, according to various embodiments herein, a lower band may be reserved (or partially used) for inter-frequency system information broadcasts. The information broadcasts encode as a message the signature information for a given femtocell, such as the central frequency, the band, and the primary scrambling code (PSC) or primary cell identifier (PCI). The information broadcast from one femto node may contain information about more than one femtocell in a given neighborhood. Further, the broadcast message may include the neighborhood relationship information between femtocells as well, including such information as adjacency matrices, with each entry (j,k) representing that intra- or inter-frequency handover is possible from the j_th femtocell to the k_th femtocell. Alternatively, the broadcast message may include neighbor lists of all femtocells.

The mobile devices, instead of tuning their radios to all the frequencies sequentially, may decode the broadcast message on the lower band channel and obtain all the requisite network information. The mobile devices, even if not capable of receiving and transmitting information simultaneously between multiple bands, can use the advertising band as an idle mode camping band (e.g., listening to this band when in idle mode) or a default blind hand-over band (e.g., automatically tuning to this band when entering a new femtocell).

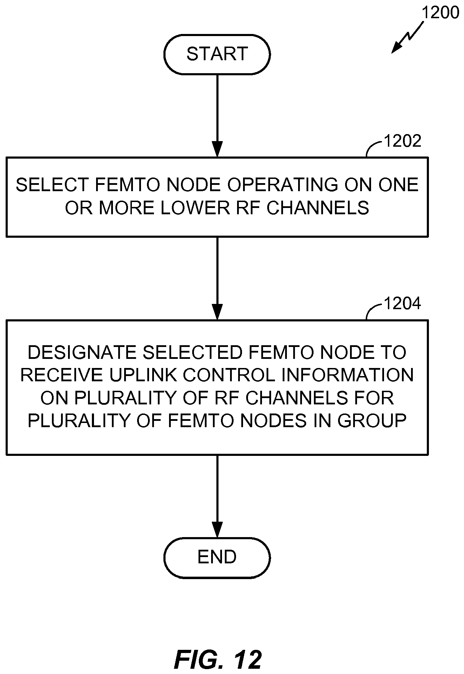

FIG. 12 is a flow diagram of an example methodology for coordinating operation among femto nodes based on common uplink control signaling. The illustrated methodology 1200 may be defined in instructions stored on a femto node, such as femto node 106, for example, or some other entity (e.g., a central controller), or on one or more components thereof, and executed by a processor to perform the described operations. As shown, a femto node operating on one or more lower RF channels may be selected (block 1202). The selected femto node may be designated to receive uplink control information on a plurality of RF channels for a plurality of femto nodes in a group (block 1204).

When backhaul coordination is available, certain femto nodes operating in lower bands may be dedicated to (or partially used for) receiving uplink control information on all frequency bands for all femto nodes in the area. This allows aggressive deployment of higher bands on the downlink without the need for closing the feedback link on the same band. The low-band femto nodes have a wider coverage range and can therefore be used to carry all the uplink control information. This signaling arrangement may be useful for mobile devices that receive or transmit on multiple bands / carriers.

FIG. 13 is a flow diagram of an example methodology for coordinating operation among femto nodes based on common downlink control signaling. The illustrated methodology 1300 may be defined in instructions stored on a femto node, such as femto node 106, for example, or some other entity (e.g., a central controller), or on one or more components thereof, and executed by a processor to perform the described operations. As shown, a femto node operating on one or more lower RF channels may be selected (block 1302). The selected femto node may be designated to transmit downlink control information on a plurality of RF channels for a plurality of femto nodes in a group (block 1304).

When backhaul coordination is available, certain femto nodes operating in lower bands may be dedicated to (or partially used for) transmitting downlink control information on all frequency bands for all femto nodes in a group. This allows aggressive deployment of higher bands on the uplink without the need for closing the feedback loop on the same band. The low-band femto nodes have a wider coverage range and can therefore be used to carry all the downlink control information, such as ACK/NACK, association, and scheduling information, for all the femto nodes. This signaling arrangement may be useful for mobile devices that receive or transmit on multiple bands / carriers.

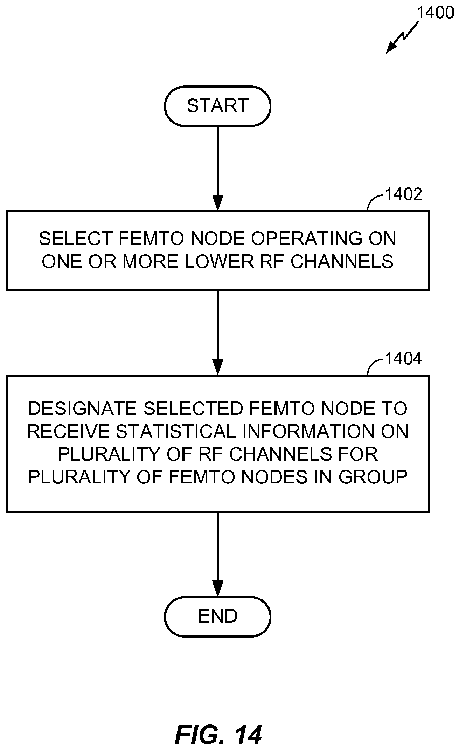

FIG. 14 is a flow diagram of an example methodology for coordinating operation among femto nodes based on the collection of network statistics information from femtocells and mobile devices. The illustrated methodology 1400 may be defined in instructions stored on a femto node, such as femto node 106, for example, or some other entity (e.g., a central controller), or on one or more components thereof, and executed by a processor to perform the described operations. As shown, a femto node operating on one or more lower RF channels may be selected (block 1402). The selected femto node may be designated to receive statistical information on a plurality of RF channels for a plurality of femto nodes in a group (block 1404).

When backhaul coordination is available, certain femto nodes operating in lower bands may be used for receiving statistical information on all frequency bands for all femtocells in a group. The mobile devices may report information such as (1) intra- or inter-frequency measurement reports, (2) 'serving cells' for data transmission and reception, and (3) handover events for multiple femto nodes seen on other frequencies. In this case, the designated femto node acts as a central receptacle to collect and aggregate information about femtocell deployment in a neighborhood. This information may be used for mobile device assisted location information, femtocell power calibration, frequency band calibration, and other purposes. This further facilitates mobile device assisted ad-hoc deployment of multiple femtocells. This signaling arrangement may be useful for mobile devices that receive or transmit on multiple bands / carriers.

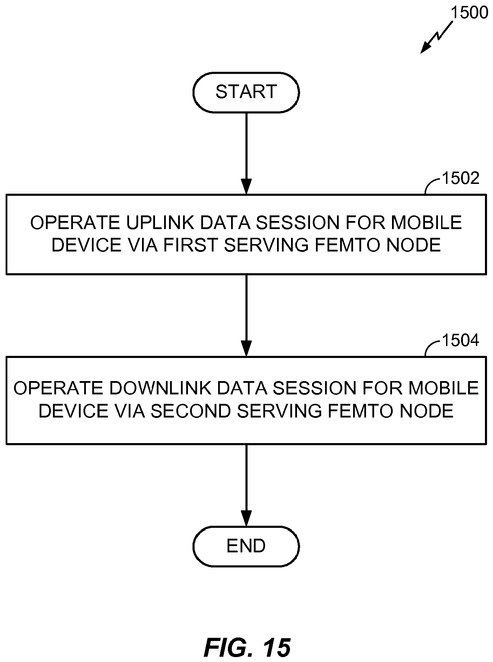

FIG. 15 is a flow diagram of an example methodology for coordinating operation among femto nodes based on separation of downlink and uplink signaling at respective femtocells. The illustrated methodology 1500 may be defined in instructions stored on a femto node, such as femto node 106, for example, or some other entity (e.g., a central controller), or on one or more components thereof, and executed by a processor to perform the described operations. As shown, an uplink data session for a mobile device may be operated via a first serving femto node (block 1502). Meanwhile, a downlink data session for the mobile device may be operated via a second serving femto node, distinct from the first serving node (block 1504). In this arrangement, scheduling, access, and interference management may be performed independently at the two serving femto nodes.

Separate downlink and uplink carrying femto nodes may be used with multi-band UEs when backhaul coordination is available. For example, an uplink data session serving femto node can be made independent of downlink data session serving femto nodes. That is, uplink scheduling, access, and interference management can be done independently of downlink serving nodes. Uplink and downlink are asymmetrical in multiple regards. For example, downlink traffic and uplink traffic are rarely symmetrical. The complexity requirements for processing uplink data and downlink data are also very different, as uplink multiple-access channels may require significant effort in interference cancellation at the femto node. Transmit power capabilities and energy sources for the uplink, at the UE, which typically operate on battery, are also different than those of femto nodes, which are typically plugged into a power supply. Similarly, the receiver characteristics, such as the number of antennas, receiver sensitivity of the UE and the Node B, can all be widely different as well, especially in a multi-band uplink and downlink system.

This splitting technique allows independent and flexible resource partitioning, load balancing, session management, processing complexity assignment, power management, backhaul management, and consequently, better overall performance including battery life. In one example, this technique may be useful when multiple UEs have a lot of data to upload (e.g., for spectators uploading live videos of some newsworthy event). When UEs have a low path loss to femtocells, they can move their uplink to higher band femtocells. This reduces uplink interference on the lower bands and makes room for other UEs that are farther from the femto cluster to transmit on the uplink of the lower bands. On the downlink, however, the serving cell selection can be done independently by the downlink load balancing and interference management requirements.

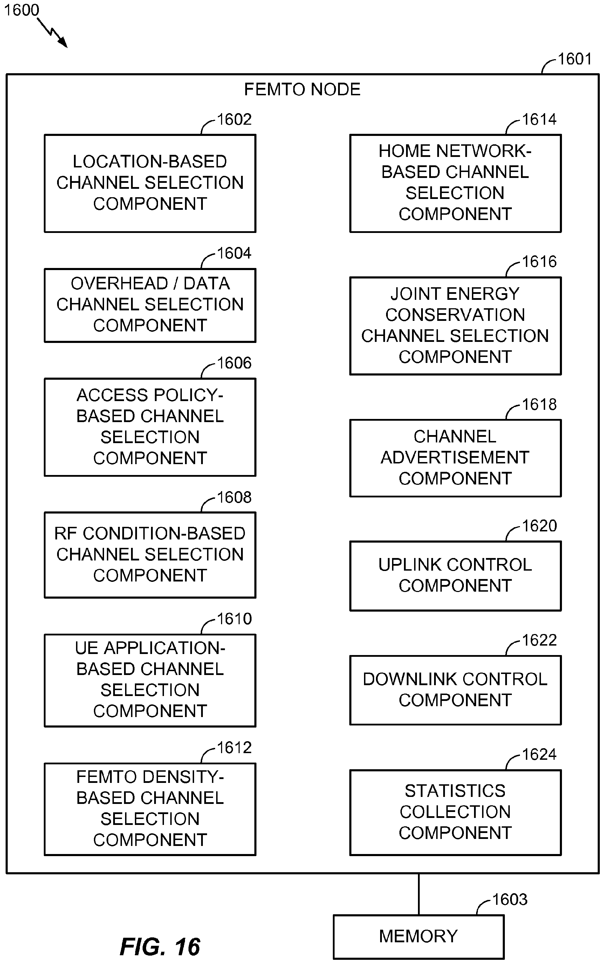

FIG. 16 illustrates an example system 1600 for femto node channel / band selection that includes a plurality of components to enable a femto node to perform agile selection of one or more operating channels / bands. System 1600 may reside at least partially within a femto node (e.g., the femto node 106 in FIG. 1). System 1600 includes a logical grouping 1601 of electrical components that can act in conjunction according to various embodiments, which may accordingly include one, some, or all of the illustrated components. In the illustrated example, logical grouping 1601 includes an electrical component 1602 for location-based channel selection, an electrical component 1604 for overhead / data channel selection, an electrical component 1606 for access policy-based channel selection, an electrical component 1608 for RF condition-based channel selection, an electrical component 1610 for UE application-based channel selection, an electrical component 1612 for femto density-based channel selection, an electrical component 1614 for home network-based channel selection, an electrical component 1616 for joint energy conservation-based channel selection, an electrical component 1618 for channel advertisement, an electrical component 1620 for uplink control communications, an electrical component 1622 for downlink control communications, and an electrical component 1624 for statistics collection. It is to be appreciated that, in some embodiments, the various components may be implemented by a processor, software, or combination thereof (e.g., firmware).

Additionally, system 1600 can include a memory 1603 that retains instructions for executing functions associated with the electrical components 1602, 1604, 1606, 1608, 1610, 1612, 1614, 1616, 1618, 1620, 1622, and 1624. While shown as being external to memory 1603, it is to be understood that one or more of the electrical components 1602, 1604, 1606, 1608, 1610, 1612, 1614, 1616, 1618, 1620, 1622, and 1624 can exist within memory 1603. In one example, electrical components 1602, 1604, 1606, 1608, 1610, 1612, 1614, 1616, 1618, 1620, 1622, and 1624 can comprise at least one processor, or each electrical component 1602, 1604, 1606, 1608, 1610, 1612, 1614, 1616, 1618, 1620, 1622, and 1624 can be a corresponding module of at least one processor. Moreover, in an additional or alternative example, electrical components 1602, 1604, 1606, 1608, 1610, 1612, 1614, 1616, 1618, 1620, 1622, and 1624 can be a computer-readable medium, where each electrical component 1602, 1604, 1606, 1608, 1610, 1612, 1614, 1616, 1618, 1620, 1622, and 1624 can be corresponding code.

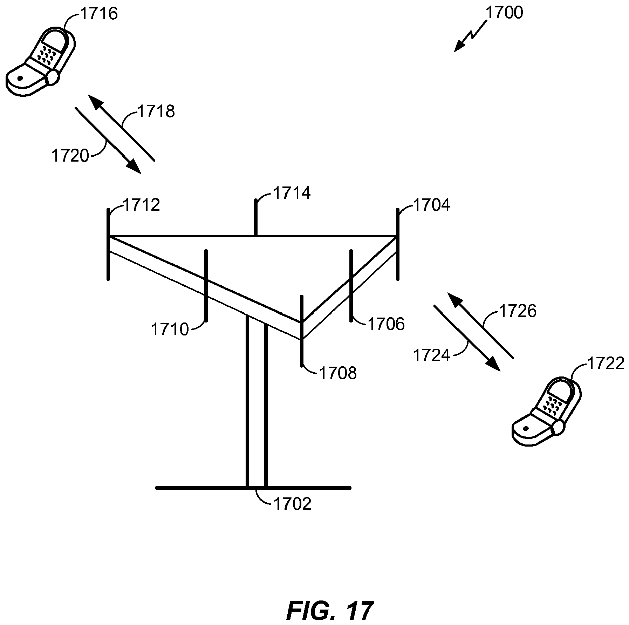

Referring now to FIG. 17, a wireless communication system 1700 is illustrated in which mechanisms for femtocell channel selection can be implemented in accordance with various embodiments presented herein. System 1700 comprises a base station 1702, which may be a femto node, such as nodes 210 or 1601, and may include the components and implement the functions described above with respect to FIGS. 1-15. In one aspect, base station 1702 can include multiple antenna groups. For example, one antenna group can include antennas 1704 and 1706, another group can comprise antennas 1708 and 1710, and an additional group can include antennas 1712 and 1714. Two antennas are illustrated for each antenna group; however, more or fewer antennas can be utilized for each group. Base station 1702 can additionally include a transmitter chain and a receiver chain, each of which can in turn comprise a plurality of components associated with signal transmission and reception (e.g., processors, modulators, multiplexers, demodulators, demultiplexers, antennas, etc.), as will be appreciated.

Base station 1702 can communicate with one or more mobile devices such as mobile device 1716 and mobile device 1722; however, it is to be appreciated that base station 1702 can communicate with substantially any number of mobile devices similar to mobile devices 1716 and 1722. Mobile devices 1716 and 1722 can be, for example, cellular phones, smart phones, laptops, handheld communication devices, handheld computing devices, satellite radios, global positioning systems, PDAs, and/or any other suitable device for communicating over wireless communication system 1700. As depicted, mobile device 1716 is in communication with antennas 1712 and 1714, where antennas 1712 and 1714 transmit information to mobile device 1716 over a forward link 1718 and receive information from mobile device 1716 over a reverse link 1720. Moreover, mobile device 1722 is in communication with antennas 1704 and 1706, where antennas 1704 and 1706 transmit information to mobile device 1722 over a forward link 1724 and receive information from mobile device 1722 over a reverse link 1726. In a frequency division duplex (FDD) system, forward link 1718 can utilize a different frequency band than that used by reverse link 1720, and forward link 1724 can employ a different frequency band than that employed by reverse link 1726, for example. Further, in a time division duplex (TDD) system, forward link 1718 and reverse link 1720 can utilize a common frequency band and forward link 1724 and reverse link 1726 can utilize a common frequency band.

Each group of antennas and/or the area in which they are designated to communicate can be referred to as a sector of base station 1702. For example, antenna groups can be designed to communicate to mobile devices in a sector of the areas covered by base station 1702. In communication over forward links 1718 and 1724, the transmitting antennas of base station 1702 can utilize beamforming to improve the signal-to-noise ratio of forward links 1718 and 1724 for mobile devices 1716 and 1722. Also, while base station 1702 utilizes beamforming to transmit to mobile devices 1716 and 1722 scattered randomly through an associated coverage, mobile devices in neighboring cells can be subject to less interference as compared to a base station transmitting through a single antenna to all its mobile devices. Moreover, mobile devices 1716 and 1722 can communicate directly with one another using a peer-to-peer or ad hoc technology. According to an example, system 1700 can be a multiple-input multiple-output (MIMO) communication system.

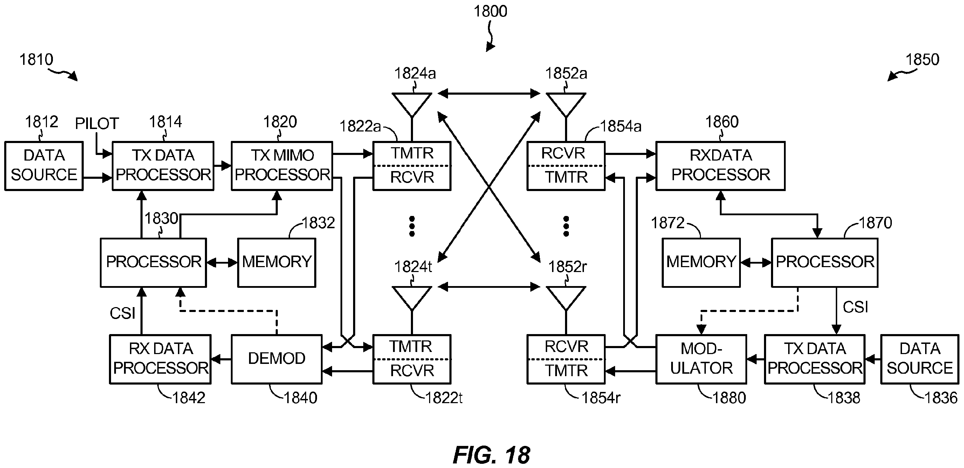

FIG. 18 shows an example wireless communication system 1800. The wireless communication system 1800 depicts one base station 1810, which can include a femto node, and one mobile device 1850 for sake of brevity. However, it is to be appreciated that system 1800 can include more than one base station and/or more than one mobile device, wherein additional base stations and/or mobile devices can be substantially similar or different from example base station 1810 and mobile device 1850 described below. In addition, it is to be appreciated that base station 1810 and/or mobile device 1850 can employ the systems (FIGS. 1 and 16) and/or methods (FIGS. 2-15) described herein to facilitate wireless communication therebetween. For example, components or functions of the systems and/or methods described herein can be part of a memory 1832 and/or 1872 or processors 1830 and/or 1870 described below, and/or can be executed by processors 1830 and/or 1870 to perform the disclosed functions.

At base station 1810, traffic data for a number of data streams is provided from a data source 1812 to a transmit (TX) data processor 1814. According to an example, each data stream can be transmitted over a respective antenna. TX data processor 1814 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 1850 to estimate a channel response. The multiplexed pilot and coded data for each data stream can be modulated (e.g., symbol mapped) based on a particular modulation scheme (e.g., binary phase-shift keying (BPSK), quadrature phase-shift keying (QPSK), M-phase-shift keying (M-PSK), M-quadrature amplitude modulation (M-QAM), etc.) selected for that data stream to provide modulation symbols. The data rate, coding, and modulation for each data stream can be determined by instructions performed or provided by processor 1830.

The modulation symbols for the data streams can be provided to a TX MIMO processor 1820, which can further process the modulation symbols (e.g., for OFDM). TX MIMO processor 1820 then provides NT modulation symbol streams to NT transmitters (TMTR) 1822a through 1822t. In various embodiments, TX MIMO processor 1820 applies beamforming weights to the symbols of the data streams and to the antenna from which the symbol is being transmitted.

Each transmitter 1822 receives and processes a respective symbol stream to provide one or more analog signals, and further conditions (e.g., amplifies, filters, and upconverts) the analog signals to provide a modulated signal suitable for transmission over the MIMO channel. Further, NT modulated signals from transmitters 1822a through 1822t are transmitted from NT antennas 1824a through 1824t, respectively.

At mobile device 1850, the transmitted modulated signals are received by NR antennas 1852a through 1852r and the received signal from each antenna 1852 is provided to a respective receiver (RCVR) 1854a through 1854r. Each receiver 1854 conditions (e.g., filters, amplifies, and downconverts) a respective signal, digitizes the conditioned signal to provide samples, and further processes the samples to provide a corresponding "received" symbol stream.

An RX data processor 1860 can receive and process the NR received symbol streams from NR receivers 1854 based on a particular receiver processing technique to provide NT "detected" symbol streams. RX data processor 1860 can demodulate, deinterleave, and decode each detected symbol stream to recover the traffic data for the data stream. The processing by RX data processor 1860 is complementary to that performed by TX MIMO processor 1820 and TX data processor 1814 at base station 1810.

The reverse link message can comprise various types of information regarding the communication link and/or the received data stream. The reverse link message can be processed by a TX data processor 1838, which also receives traffic data for a number of data streams from a data source 1836, modulated by a modulator 1880, conditioned by transmitters 1854a through 1854r, and transmitted back to base station 1810.

At base station 1810, the modulated signals from mobile device 1850 are received by antennas 1824a through 1824t, conditioned by receivers 1822a through 1822t, demodulated by a demodulator 1840, and processed by a RX data processor 1842 to extract the reverse link message transmitted by mobile device 1850. Further, processor 1830 can process the extracted message to determine which precoding matrix to use for determining the beamforming weights.

Processors 1830 and 1870 can direct (e.g., control, coordinate, manage, etc.) operation at base station 1810 and mobile device 1850, respectively. Respective processors 1830 and 1870 can be associated with memory 1832 and 1872 that store program codes and data. Processors 1830 and 1870 can also perform functionalities described herein to support selecting various operating parameters for one or more femto nodes.

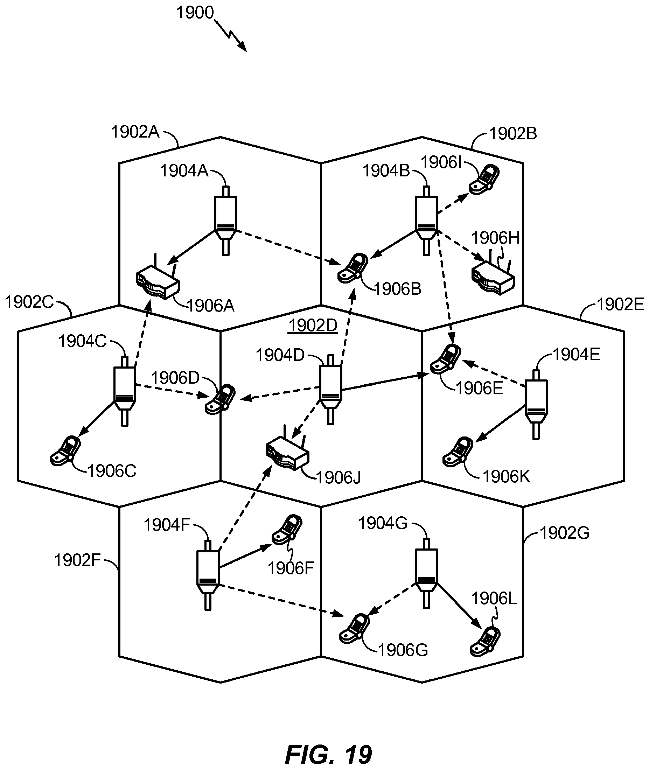

FIG. 19 illustrates a wireless communication system 1900, configured to support a number of users, in which the teachings herein may be implemented. The system 1900 provides communication for multiple cells 1902, such as, for example, macro cells 1902A - 1902G, with each cell being serviced by a corresponding access node1904 (e.g., macro nodes 1904A - 1904G). As shown in FIG. 19, access terminals 1906 (e.g., access terminals 1906A - 1906L) can be dispersed at various locations throughout the system over time. Each access terminal 1906 can communicate with one or more access nodes 1904 on a forward link (FL) and/or a reverse link (RL) at a given moment, depending upon whether the access terminal 1906 is active and whether it is in soft handoff, for example. The wireless communication system 1900 can provide service over a large geographic region. In some aspects, some of the mobile devices 1906, such as devices 1906A, 1906H, and 1906J, may be femto nodes, such as nodes femto nodes 104, 106, 108, 110, and 112, and may include the components and implement the functions described above with respect to FIGS. 1-16.

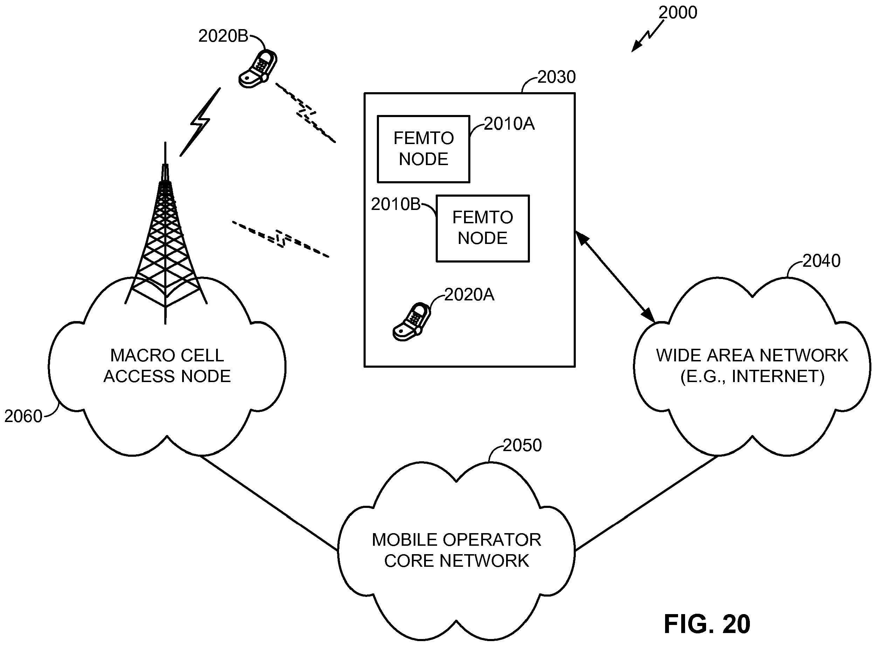

FIG. 20 illustrates an exemplary communication system 2000 where one or more femto nodes are deployed within a network environment. Specifically, the system 2000 includes multiple femto nodes 2010A and 2010B (e.g., femto nodes or H(e)NB) installed in a relatively small scale network environment (e.g., in one or more user residences 2030). Each femto node 2010 can be coupled to a wide area network 2040 (e.g., the Internet) and a mobile operator core network 2050 via a digital subscriber line (DSL) router, a cable modem, a wireless link, or other connectivity means (not shown). As will be discussed below, each femto node 2010 can be configured to serve associated access terminals 2020 (e.g., access terminal 2020A) and, optionally, alien access terminals 2020 (e.g., access terminal 2020B). In other words, access to femto nodes 2010 can be restricted such that a given access terminal 2020 can be served by a set of designated (e.g., home) femto node(s) 2010 but may not be served by any non-designated femto nodes 2010 (e.g., a neighbor's femto node).

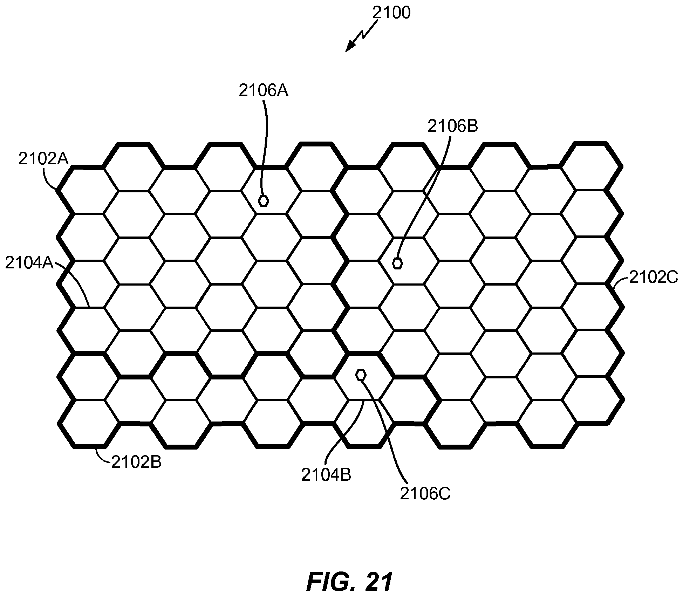

FIG. 21 illustrates an example of a coverage map 2100 where several tracking areas 2102 (or routing areas or location areas) are defined, each of which includes several macro coverage areas 2104. Here, areas of coverage associated with tracking areas 2102A, 2102B, and 2102C are delineated by the wide lines and the macro coverage areas 2104 (e.g., 2104A and 2104B) are represented by the hexagons. The tracking areas 2102 also include femto coverage areas 2106 (e.g., 2106A, 2106B, and 2106C). In this example, each of the femto coverage areas 2106 (e.g., femto coverage area 2106C) is depicted within a macro coverage area 2104 (e.g., macro coverage area 2104B). It should be appreciated, however, that a femto coverage area 2106 may not lie entirely within a macro coverage area 2104. In practice, a large number of femto coverage areas 2106 can be defined within a given tracking area 2102 or macro coverage area 2104. Also, one or more pico coverage areas (not shown) can be defined within a given tracking area 2102 or macro coverage area 2104.

Referring again to FIG. 20, the owner of a femto node 2010 can subscribe to mobile service, such as, for example, 3G mobile service, offered through the mobile operator core network 2050. In another example, the femto node 2010 can be operated by the mobile operator core network 2050 to expand coverage of the wireless network. In addition, an access terminal 2020 can be capable of operating both in macro environments and in smaller scale (e.g., residential) network environments. Thus, for example, depending on the current location of the access terminal 2020, the access terminal 2020 can be served by a macro node access node 2060 or by any one of a set of femto nodes 2010 (e.g., the femto nodes 2010A and 2010B that reside within a corresponding user residence 2030). For example, when a subscriber is outside his home, he or she may be served by a standard macro node access node (e.g., node 2060) and when the subscriber is at home, he or she may be served by a femto node (e.g., node 2010A). Here, it should be appreciated that a femto node 2010 can be backward compatible with existing access terminals 2020.

A femto node 2010 can be deployed on a single frequency or, in the alternative, on multiple frequencies. Depending on the particular configuration, the single frequency or one or more of the multiple frequencies can overlap with one or more frequencies used by a macro node access node (e.g., node 2060). In some aspects, an access terminal 2020 can be configured to connect to a preferred femto node (e.g., the home femto node of the access terminal 2020) whenever such connectivity is possible. For example, whenever the access terminal 2020 is within the user's residence 2030, it can communicate with the home femto node 2010.

In some aspects, if the access terminal 2020 operates within the mobile operator core network 2050 but is not residing on its most preferred network (e.g., as defined in a preferred roaming list), the access terminal 2020 can continue to search for the most preferred network (e.g., femto node 2010) using Better System Reselection (BSR), which can involve a periodic scanning of available systems to determine whether better systems are currently available, and subsequent efforts to associate with such preferred systems. Using an acquisition table entry (e.g., in a preferred roaming list), in one example, the access terminal 2020 can limit the search for a specific band and channel. For example, the search for the most preferred system can be repeated periodically. Upon discovery of a preferred femto node, such as femto node 2010, the access terminal 2020 selects the femto node 2010 for camping within its coverage area.

A femto node can be restricted in some aspects. For example, a given femto node may only provide certain services to certain access terminals. In deployments with so-called restricted (or closed) association, a given access terminal can only be served by the macro node mobile network and a defined set of femto nodes (e.g., the femto nodes 2010 that reside within the corresponding user residence 2030). In some implementations, a femto node can be restricted to not provide, for at least one access terminal, at least one of: signaling, data access, registration, paging, or service.

In some aspects, a restricted femto node (which can also be referred to as a Closed Subscriber Group H(e)NB) is one that provides service to a restricted provisioned set of access terminals. This set can be temporarily or permanently extended as necessary. In some aspects, a Closed Subscriber Group (CSG) can be defined as the set of access nodes (e.g., femto nodes) that share a common access control list of access terminals. A channel on which all femto nodes (or all restricted femto nodes) in a region operate can be referred to as a femto channel.

Various relationships can thus exist between a given femto node and a given access terminal. For example, from the perspective of an access terminal, an open femto node can refer to a femto node with no restricted association. A restricted femto node can refer to a femto node that is restricted in some manner (e.g., restricted for association and/or registration). A home femto node can refer to a femto node on which the access terminal is authorized to access and operate on. A guest femto node can refer to a femto node on which an access terminal is temporarily authorized to access or operate on. An alien femto node can refer to a femto node on which the access terminal is not authorized to access or operate on, except for perhaps emergency situations (e.g., 911 calls).

From a restricted femto node perspective, a home access terminal can refer to an access terminal that is authorized to access the restricted femto node. A guest access terminal can refer to an access terminal with temporary access to the restricted femto node. An alien access terminal can refer to an access terminal that does not have permission to access the restricted femto node, except for perhaps emergency situations, for example, 911 calls (e.g., a mobile device that does not have the credentials or permission to register with the restricted femto node).

For convenience, the disclosure herein describes various functionality in the context of a femto node. It should be appreciated, however, that a pico node can provide the same or similar functionality as a femto node, but for a larger coverage area. For example, a pico node can be restricted, a home pico node can be defined for a given access terminal, and so on.

The various illustrative logics, logical blocks, modules, components, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal.

In one or more aspects, the functions, methods, or algorithms described may be implemented in hardware, software, firmware, or any combination thereof. If implemented in software, the functions may be stored or transmitted as one or more instructions or code on a computer-readable medium, which may be incorporated into a computer program product. Computer-readable media include both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM, or other optical disk storage, magnetic disk storage or other magnetic storage devices, or any other medium that can be used to carry or store desired program code in the form of instructions or data structures and that can be accessed by a computer. Also, substantially any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc, where disks usually reproduce data magnetically, while discs usually reproduce data optically with lasers. Combinations of the above should also be included within the scope of computer-readable media.

## Claims

1. A method for femto node radio frequency channel selection, comprising:
selecting between a first band of operating channels and a second band of operating channels for a femto node (104, 106, 110) based on at least one band-selection criterion, wherein the first band includes a plurality of channels that are higher in frequency than a plurality of channels in the second band, and wherein the band-selection criterion is configured to select the first band to provide a smaller coverage area for the femto node (104, 106, 110) and to select the second band to provide a larger coverage area for the femto node (104, 106, 110),
wherein the at least one band-selection criterion comprises a location of the femto node (104, 106, 110) in a building (101); and
configuring the femto node (104, 106, 110) for operation according to one or more operating channels in the selected band;
wherein the selecting comprises:
determining the location of the femto node (104, 106, 110) in the building (101); and
selecting between the first and second bands for the femto node based on the location of the femto node in the building; and
wherein the second band is selected when the femto node (104, 106, 110) is located near a window or side of the building (101), and wherein the first band is selected when the femto node (104, 106, 110) is located deeper inside the building (101).

2. The method of claim 1, wherein the configuring comprises modifying a channel setting of the femto node (104, 106, 110).

3. The method of claim 1, wherein the configuring comprises sending a message to the femto node (104, 106, 110) instructing the femto node (104, 106, 110) to operate on the selected band.

4. An apparatus for femto node radio frequency channel selection, comprising:
means for selecting between a first band of operating channels and a second band of operating channels for a femto node (104, 106, 110) based on at least one band-selection criterion, wherein the first band includes a plurality of channels that are higher in frequency than a plurality of channels in the second band, and wherein the band-selection criterion is configured to select the first band to provide a smaller coverage area for the femto node (104, 106, 110) and to select the second band to provide a larger coverage area for the femto node (104, 106, 110)
wherein the at least one band-selection criterion comprises a location of the femto node in a building;
means for configuring the femto node (104, 106, 110) for operation according to one or more operating channels in the selected band; and
means for determining the location of the femto node (104, 106, 110) in the building (101);
wherein the means for selecting is configured to select between the first and second bands for the femto node based on the location of the femto node in the building;
such that the second band is selected when the femto node (104, 106, 110) is located near a window or side of the building (101), and the first band is selected when the femto node (104, 106, 110) is located deeper inside the building (101).

5. A non-transitory computer-readable medium comprising code, which, when executed by a processor, causes the processor to perform operations for femto node radio frequency channel selection, the non-transitory computer-readable medium comprising code for performing the method of claim 1.

## Patentansprüche

1. Ein Verfahren zur Femtoknoten-Hochfrequenzkanal-Auswahl, aufweisend:
Auswählen zwischen einem ersten Band von Betriebskanälen und einem zweiten Band von Betriebskanälen für einen Femtoknoten (104, 106, 110) basierend auf wenigstens einem Bandauswahlkriterium, wobei das erste Band eine Vielzahl von Kanälen, die eine höhere Frequenz aufweisen als eine Vielzahl von Kanälen in dem zweiten Band, enthält und wobei das Bandauswahlkriterium konfiguriert ist zum Auswählen des ersten Bands, um einen kleineren Abdeckungsbereich für den Femtoknoten (104, 106, 110) vorzusehen, und zum Auswählen des zweiten Bands, um einen größeren Abdeckungsbereich für den Femtoknoten (104, 106, 110) vorzusehen,
wobei das wenigstens eine Bandauswahlkriterium eine Position des Femtoknotens (104, 106, 110) in einem Gebäude (101) aufweist, und
Konfigurieren des Femtoknotens (104, 106, 110) für einen Betrieb gemäß einem oder mehreren Betriebskanälen in dem ausgewählten Band,
wobei das Auswählen aufweist:
Bestimmen der Position des Femtoknotens (104, 106, 110) in dem Gebäude (101), und
Auswählen zwischen den ersten und zweiten Bändern für den Femtoknoten basierend auf der Position des Femtoknotens in dem Gebäude, und
wobei das zweite Band ausgewählt wird, wenn der Femtoknoten (104, 106, 110) in der Nähe eines Fensters oder einer Seite des Gebäudes (101) angeordnet ist, und wobei das erste Band ausgewählt wird, wenn der Femtoknoten (104, 106, 110) tiefer in dem Gebäude (101) angeordnet ist.

2. Verfahren nach Anspruch 1, wobei das Konfigurieren das Modifizieren einer Kanaleinstellung des Femtoknotens (104, 106, 110) aufweist.

3. Verfahren nach Anspruch 1, wobei das Konfigurieren das Senden einer Nachricht an den Femtoknoten (104, 106, 110), die den Femtoknoten (104, 106, 110) für einen Betrieb auf dem ausgewählten Band anweist, aufweist.

4. Eine Vorrichtung zur Femtoknoten-Hochfrequenzkanal-Auswahl, aufweisend:
Mittel zum Auswählen zwischen einem ersten Band von Betriebskanälen und einem zweiten Band von Betriebskanälen für einen Femtoknoten (104, 106, 110) basierend auf wenigstens einem Bandauswahlkriterium, wobei das erste Band eine Vielzahl von Kanälen, die eine höhere Frequenz aufweisen als eine Vielzahl von Kanälen in dem zweiten Band, enthält und wobei das Bandauswahlkriterium konfiguriert ist zum Auswählen des ersten Bands, um einen kleineren Abdeckungsbereich für den Femtoknoten (104, 106, 110) vorzusehen, und zum Auswählen des zweiten Bands, um einen größeren Abdeckungsbereich für den Femtoknoten (104, 106, 110) vorzusehen,
wobei das wenigstens eine Bandauswahlkriterium eine Position des Femtoknotens in einem Gebäude (101) aufweist,
Mittel zum Konfigurieren des Femtoknotens (104, 106, 110) für einen Betrieb gemäß einem oder mehreren Betriebskanälen in dem ausgewählten Band, und
Mittel zum Bestimmen der Position des Femtoknotens (104, 106, 110) in dem Gebäude (101),
wobei die Mittel zum Auswählen konfiguriert sind zum Auswählen zwischen den ersten und zweiten Bändern für den Femtoknoten basierend auf der Position des Femtoknotens in dem Gebäude,
sodass das zweite Band ausgewählt wird, wenn der Femtoknoten (104, 106, 110) in der Nähe eines Fensters oder einer Seite des Gebäudes (101) angeordnet ist, und das erste Band ausgewählt wird, wenn der Femtoknoten (104, 106, 110) tiefer in dem Gebäude (101) angeordnet ist.

5. Ein nicht-transitorisches, computerlesbares Medium, das einen Code aufweist, der bei einer Ausführung durch einen Prozessor veranlasst, dass der Prozessor Operationen zum Auswählen eines Femtoknoten-Frequenzkanals durchführt, wobei das nicht-transitorische, computerlesbare Medium einen Code zum Durchführen des Verfahrens von Anspruch 1 aufweist.

## Revendications

1. Procédé destiné à une sélection de canal radiofréquence de noeud femto, comprenant :
une sélection entre une première bande de canaux de fonctionnement et une seconde bande de canaux de fonctionnement pour un noeud femto (104, 106, 110) sur la base d'au moins un critère de sélection de bande, dans lequel la première bande inclut une pluralité de canaux qui sont supérieurs en fréquence à une pluralité de canaux dans la seconde bande, et dans lequel le critère de sélection de bande est configuré pour sélectionner la première bande pour fournir une zone de couverture plus petite pour le noeud femto (104, 106, 110) et pour sélectionner la seconde bande pour fournir une zone de couverture plus étendue pour le noeud femto (104, 106, 110),
dans lequel l'au moins un critère de sélection de bande comprend un emplacement du noeud femto (104, 106, 110) dans un bâtiment (101) ; et
une configuration du noeud femto (104, 106, 110) pour un fonctionnement selon un ou plusieurs canaux de fonctionnement dans la bande sélectionnée ;
dans lequel la sélection comprend :
une détermination de l'emplacement du noeud femto (104, 106, 110) dans le bâtiment (101) ; et
une sélection entre les première et seconde bandes pour le noeud femto sur la base de l'emplacement du noeud femto dans le bâtiment ; et
dans lequel la seconde bande est sélectionnée lorsque le noeud femto (104, 106, 110) est située à proximité d'une fenêtre ou d'un côté du bâtiment (101), et dans lequel la première bande est sélectionnée lorsque le noeud femto (104, 106, 110) est situé plus profondément à l'intérieur du bâtiment (101).

2. Procédé selon la revendication 1, dans lequel la configuration comprend une modification d'un paramétrage de canal du noeud femto (104, 106, 110).

3. Procédé selon la revendication 1, dans lequel la configuration comprend un envoi d'un message vers le noeud femto (104, 106, 110) ordonnant au noeud femto (104, 106, 110) de fonctionner sur la bande sélectionnée.

4. Appareil destiné à une sélection de canal radiofréquence de noeud femto, comprenant :
un moyen de sélection entre une première bande de canaux de fonctionnement et une seconde bande de canaux de fonctionnement pour un noeud femto (104, 106, 110) sur la base d'au moins un critère de sélection de bande, dans lequel la première bande inclut une pluralité de canaux qui sont supérieurs en fréquence à une pluralité de canaux dans la seconde bande, et dans lequel le critère de sélection de bande est configuré pour sélectionner la première bande pour fournir une zone de couverture plus petite pour le noeud femto (104, 106, 110) et pour sélectionner la seconde bande pour fournir une zone de couverture plus étendue pour le noeud femto (104, 106, 110) dans lequel l'au moins un critère de sélection de bande comprend un emplacement du nœud femto dans un bâtiment ;
un moyen de configuration du noeud femto (104, 106, 110) pour un fonctionnement selon un ou plusieurs canaux de fonctionnement dans la bande sélectionnée ; et
un moyen de détermination de l'emplacement du noeud femto (104, 106, 110) dans le bâtiment (101) ;
dans lequel le moyen de sélection est configuré pour sélectionner entre les première et seconde bandes pour le noeud femto sur la base de l'emplacement du noeud femto dans le bâtiment ;
de telle sorte que la seconde bande est sélectionnée lorsque le noeud femto (104, 106, 110) est situé à proximité d'une fenêtre ou d'un côté du bâtiment (101), et la première bande est sélectionnée lorsque le noeud femto (104, 106, 110) est situé plus profondément à l'intérieur du bâtiment (101).

5. Support lisible par ordinateur non transitoire comprenant un code, qui, lorsqu'exécuté par un processeur, amène le processeur à réaliser des opérations pour une sélection de canal radiofréquence de noeud femto, le support lisible par ordinateur non transitoire comprenant un code pour une réalisation du procédé selon la revendication 1.
